# EUROPEAN PATENT APPLICATION

(11) **EP 4 328 080 A1**
(43) Date of publication of application: **28.02.2024**
(21) Application number: 22803656.2
(22) Date of filing: 30.03.2022
(51) Int. Cl.: B60L 58/10, B60L 58/12, B60L 3/00

(54) **VEHICLE POWER-OFF CONTROL METHOD AND APPARATUS, AND MEDIUM AND DEVICE**

(30) Priority: 20.05.2021 CN 202110553911
(71) Applicant: Great Wall Motor Company Limited, Hebei 071000 (CN)
(72) Inventor: ZHANG, Gengnan, Baoding, Hebei 071000 (CN)
(74) Representative: Klunker IP Patentanwälte PartG mbB
(86) International application number: PCT/CN2022/084180
(87) International publication number: WO 2022/242331

(57) **Abstract**

A method and a device for controlling vehicle power-off, a medium, and an apparatus. The method includes: determining, by an HCU, whether a state of a vehicle meets a preset power-off condition if a vehicle power-off indication triggered by a user is received (S11); starting a timekeeping by the HCU when the state of the vehicle is determined to meet the preset power-off condition and an SOC of a power battery is greater than a predetermined charging threshold (S12); sending, by the HCU, a relay disconnection request to a BMS if it is detected that a driver is absent in the vehicle and the timekeeping reaches a predetermined period (S13); and controlling, by the BMS, a relay of the power battery to be disconnected in response to the relay disconnection request received (S14). Thus, the energy state of the power battery is also considered to ensure that the delayed disconnection of the contacts of the relay does not significantly affect the energy reserve of the power battery, thus minimizing the impact of noise on the driver while ensuring the existing endurance of the vehicle

## Description

### CROSS REFERENCE TO RELATED APPLICATION

The present disclosure claims priority of a Chinese Patent Application, with Application No. 202110553911.7, submitted to CNIPA on May 20, 2021, entitled "method and device for controlling vehicle power-off, medium, and apparatus"; the content of which is incorporated in the present disclosure by reference.

### TECHNICAL FIELD

The present disclosure relates to the field of electric vehicle automatic control technology, and more particularly to a method and a device for controlling vehicle power-off, a medium, and an apparatus.

### BACKGROUND

At present, the phenomenon of energy shortage is becoming increasingly evident, and the requirement for the development of new energy in various countries around the world is becoming stronger. The Chinese government has also vigorously supported the development of the new energy vehicle industry through various policies.

New energy vehicles have added power-on and power-off functions, which control high-voltage (60 V~1500 V) components (such as a DC/DC) and driving components to enter/exit working mode through complex control strategies. When the high-voltage components of the new energy vehicles are controlled to exit the working mode, the most important thing is to enable the high-voltage power battery to turn-on the relay and complete the high-voltage power-off. However, when the contacts of the relay of the high-voltage power battery are disconnected, there will be a sound, causing the driver to hear the sound of the relay of the power battery being disconnected when the vehicle is powered off, which can cause confusion or dissatisfaction of the driver. Therefore, dealing with the sound of the relay of the high-voltage battery generated when being turned on has become a problem that engineers have to consider.

### SUMMARY

An object of the present disclosure is to provide an intelligent and an energy-saving method and device for controlling vehicle power-off, a medium, and a device.

In order to achieve above object, the present disclosure provides a method and for controlling vehicle power-off, and the method includes steps of:
determining, by a hybrid control unit (HCU), whether a state of a vehicle meets a preset power-off condition if a vehicle power-off instruction triggered by a user is received;
starting a timekeeping by the HCU when the state of the vehicle is determined to meet the preset power-off condition and an State of Charge (SOC) of a power battery is greater than a predetermined charging threshold;
sending a relay disconnection request to a Battery Management System (BMS) from the HCU if it is detected that a driver is absent in the vehicle and the timekeeping reaches a predetermined period; and
controlling, by the BMS, a relay of the power battery to be disconnected in response to the relay disconnection request received.

Optionally, the method further includes:
sending directly, by the HCU, the relay disconnection request to the BMS if it is determined that the state of the vehicle meets the preset power-off condition and the SOC of the power battery is less than or equal to the predetermined charging threshold.

Optionally, the method further includes:
sending, by the HCU, the relay disconnection request to the BMS if the timekeeping reaches the predetermined period.

Optionally, after the step of controlling, by the BMS, a relay of the power battery to be disconnected, the method further includes:
detecting, by the BMS, whether the relay of the power battery is adhered;
sending, by the BMS, a detected result to the HCU; and
controlling, by the HCU, the vehicle to enter a dormant state if the detected result indicates an absence of adhesion.

Optionally, the preset power-off condition includes that: a vehicle speed is less than a predetermined vehicle speed threshold, a engine rotating speed is less than a predetermined rotating speed threshold, a belt-driven starter generator exits a working state, a DCDC exits the working state, an SOC of a low-voltage battery is greater than a predetermined power threshold, and a current in a high-voltage circuit is less than a predetermined current threshold.

The present disclosure provides a device for controlling vehicle power-off, and the device includes:
an HCU, configured for determining whether a state of a vehicle meets a preset power-off condition if a vehicle power-off instruction triggered by a user is received; the HCU starts a timekeeping when the state of the vehicle is determined to meet the preset power-off condition and an SOC of a power battery is greater than a predetermined charging threshold; the HCU sends a relay disconnection request to a BMS if it is detected that a driver is absent in the vehicle and the timekeeping reaches a predetermined period; and
the BMS, configured for controlling the power battery to be disconnected in response to the relay disconnection request received.

Optionally, the HCU is further configured for sending directly the relay disconnection request to the BMS if it is determined that the state of the vehicle meets the preset power-off condition and the SOC of the power battery is less than or equal to the predetermined charging threshold.

Optionally, the HCU is further configured for sending the relay disconnection request to the BMS if the timekeeping reaches the predetermined period.

The present disclosure further provides a computer-readable storage medium storing a computer program thereon, and when the computer program is executed by a processor, the steps of the method in the present disclosure can be implemented.

The present disclosure further provides an electronic apparatus, comprising: a memory storing a computer program thereon; a processor configured for executing the computer program in the memory to implement the steps of the method in the present disclosure.

Through the above technical solution, when the state of the vehicle is determined to meet the preset power-off condition and the SOC of the power battery is greater than the predetermined charging threshold, the HCU starts the timekeeping; when it is detected that a driver is absent in the vehicle and the timekeeping reaches a predetermined period, the HCU sends the relay disconnection request to the BMS, so that the BMS controls the relay of the power battery to be disconnected. In this way, on the one hand, when the driver is absent in the vehicle, the relay of the power battery is controlled to be disconnected, which can avoid the noise generated by the contacts of the relay disconnecting from affecting the driver; on the other hand, the energy state of the power battery is also considered to ensure that the delayed disconnection of the contacts of the relay does not significantly affect the energy reserve of the power battery, thus minimizing the impact of noise on the driver while ensuring the existing endurance of the vehicle.

The other features and advantages of the present disclosure will be explained in detail in the subsequent specific embodiments.

### BRIEF DESCRIPTION OF THE DRAWINGS

The accompanying drawings are intended to provide a further understanding of the present disclosure and form a part of the specification. Together with the specific embodiments below, they are used to explain the present disclosure, but do not constitute a limitation on the present disclosure. In the drawings:
FIG. 1 is a flowchart of a method for controlling vehicle power-off provided in an exemplary embodiment;
FIG. 2 is a flowchart of a method for controlling vehicle power-off provided by another exemplary embodiment;
FIG. 3 is a flowchart of a method for controlling vehicle power-off provided by another exemplary embodiment;
FIG. 4 is a flowchart of a method for controlling vehicle power-off provided by another exemplary embodiment;
FIG. 5 is a flowchart of a method for controlling vehicle power-off provided by another exemplary embodiment;
FIG. 6 is a block diagram of a device for controlling vehicle power-off provided in an exemplary embodiment; and
FIG. 7 is a block diagram of an electronic apparatus provided in an exemplary embodiment.

### DETAILED DESCRIPTION OF EMBODIMENTS

The following is a detailed description of the specific implementation of the present disclosure in conjunction with the attached drawings. It should be understood that the specific embodiments described herein are intended only to illustrate and interpret the present disclosure and are not intended to limit the present disclosure.

New energy vehicles have added power-on and power-off functions, which control high-voltage components and driving components to enter/exit working mode through complex control strategies. When the high-voltage components of the new energy vehicles are controlled to exit the working mode, the most important thing is to enable the high-voltage power battery to turn-on the relay and complete the high-voltage power-off. Due to the hardware characteristics of the power battery, an obvious sound will be generated when the contacts of the relay of the power battery are turned on, which causes the driver to hear obvious abnormal noises during the process of parking and powering off the vehicle, which is a type of noise for the driver. Under the condition of ensuring the existing endurance of the vehicle, the noise effect on the driver caused by the disconnection of the contacts of the relay is avoided as far as possible.

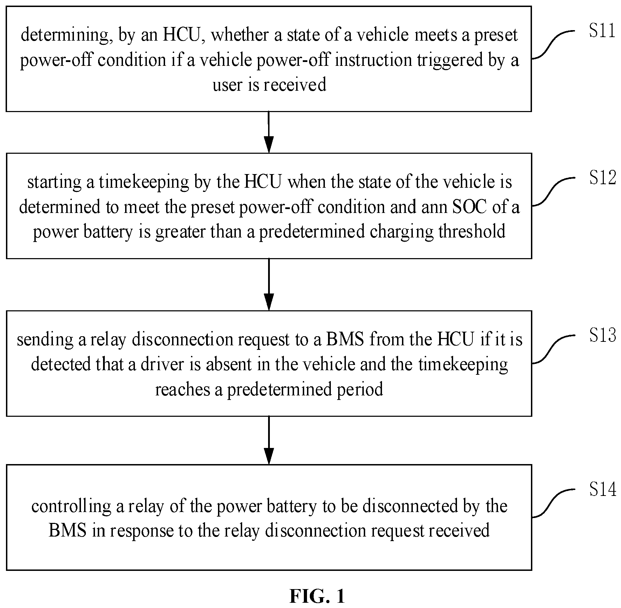

FIG. 1 is a flowchart of a method for controlling vehicle power-off provided in an exemplary embodiment. As shown in FIG. 1, the method can include the following steps.

In step S11, determining, by an HCU, whether a state of a vehicle meets a preset power-off condition if a vehicle power-off instruction triggered by a user is received.

In step S12, starting a timekeeping by the HCU when the state of the vehicle is determined to meet the preset power-off condition and an SOC of a power battery is greater than a predetermined charging threshold.

In step S13, sending, by the HCU, a relay disconnection request to a BMS if it is detected that a driver is absent in the vehicle and the timekeeping reaches a predetermined period.

In step S14, controlling, by the BMS, a relay of the power battery to be disconnected in response to the relay disconnection request received.

When the vehicle needs to be powered off, the user can trigger a specific button to send the vehicle power-off instructions to the HCU. In related technology, the HCU controls the vehicle to complete the power-off after the vehicle power-off instruction is received. For example, when the user presses the button of Passive Entry Passive Start (PEPS) system, the power supply system disconnects the IG1 and IG2 relays, and the power mode is switched to OFF, then the power supply to each control component is cut off, and the vehicle is powered off.

In the present disclosure, when the vehicle power-off instruction is received, the HCU can first determine whether the state of the vehicle meets the preset power-off condition. If the above preset power-off condition is met, then it can be considered that the relay of the power battery can be cut off to safely power off. The preset power-off condition can include: a vehicle speed is less than a predetermined vehicle speed threshold, a engine rotating speed is less than a predetermined rotating speed threshold (for example, if the engine rotating speed is less than 2km/h, the vehicle is considered to be stationary), a belt-driven starter generator exits a working state, a DCDC exits the working state, an SOC of a low-voltage battery is greater than a predetermined power threshold, and a current in a high-voltage circuit is less than a predetermined current threshold. The present disclosure does not limit the order in which the above conditions should be determined.

If the SOC of the power battery is greater than the predetermined charge threshold, it can be considered that the power battery has more power at present, which can allow the delayed disconnection of the relay of the power battery to avoid noise effects on the driver.

Whether the driver leaves the seat and is not in the vehicle can be determined by the signal feedback by the gravity sensing seat configured in the vehicle. For example, if the signal feedback by the gravity sensing seat indicates that the weight on the seat is greater than the predetermined weight threshold, the driver can be considered to be still in the vehicle; conversely, if the signal feedback by the gravity sensing seat indicates that the weight on the seat is less than or equal to the predetermined weight threshold, the driver can be considered not in the vehicle.

Alternatively, the HCU can further comprehensively determine whether the driver leaves the seat based on the acceleration pedal, brake pedal, seat belt state, and vehicle door state. For example, when the acceleration or brake pedal is depressed, the seat belt is not unfastened, and the door is not opened after the speed decreases to zero, any of these criteria can determine that the driver is still in the vehicle.

After the user triggers the vehicle power-off instruction, and if it is detected that the driver is absent in the vehicle and the timekeeping reaches the predetermined period, then the HCU detects that the driver is absent in the vehicle and sends a relay disconnection request to the BMS to disconnect the relay that controls the power battery. The predetermined period can be based on trial or experience.

Through the above technical solution, when the state of the vehicle is determined to meet the preset power-off condition and the SOC of the power battery is greater than the predetermined charging threshold, the HCU starts the timekeeping; when it is detected that a driver is absent in the vehicle and the timekeeping reaches a predetermined period, the HCU sends the relay disconnection request to the BMS, so that the BMS controls the relay of the power battery to be disconnected. In this way, on the one hand, when the driver is absent in the vehicle, the relay of the power battery is controlled to be disconnected, which can avoid the noise generated by the contacts of the relay disconnecting from affecting the driver; on the other hand, the energy state of the power battery is also considered to ensure that the delayed disconnection of the contacts of the relay does not significantly affect the energy reserve of the power battery, thus minimizing the impact of noise on the driver while ensuring the existing endurance of the vehicle.

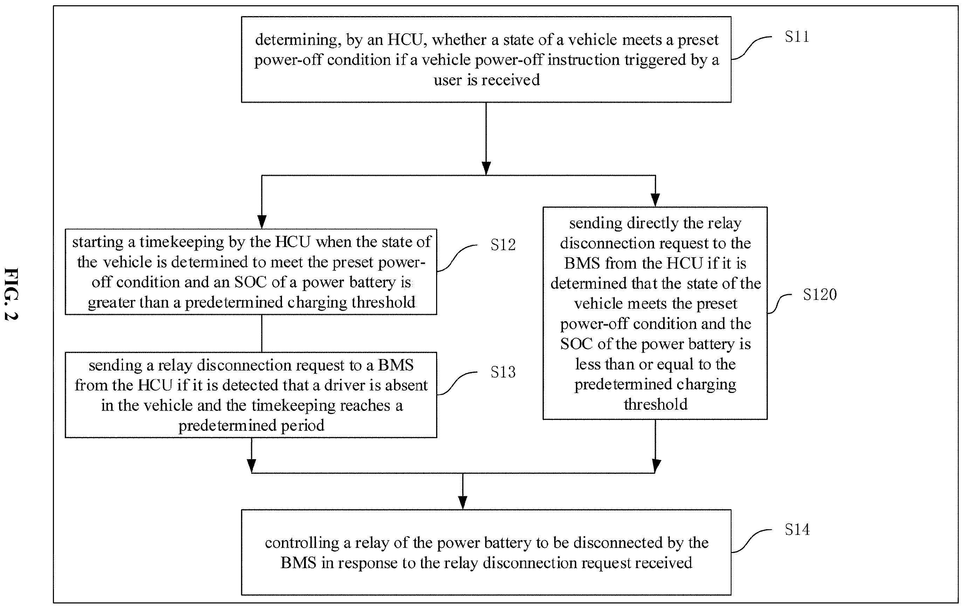

FIG. 2 is a flowchart of a method for controlling vehicle power-off provided by another exemplary embodiment. As shown in FIG. 2, the method can further include step S120 on basis of FIG. 1.

in step S120, sending directly, by the HCU, the relay disconnection request to the BMS if it is determined that the state of the vehicle meets the preset power-off condition and the SOC of the power battery is less than or equal to the predetermined charging threshold.

If the SOC of the power battery is less than or equal to the predetermined charge threshold, it can be considered that the current power of the power battery is low. In order to ensure the subsequent power consumption, it is not considered to delay disconnecting the relay of the power battery, and the HCU does not timing and directly power off the vehicle when the relay is disconnected.

In the embodiment, priority is given to ensuring the endurance power consumption of the vehicle to avoid affecting the normal running of the vehicle due to the delayed disconnection of the relay.

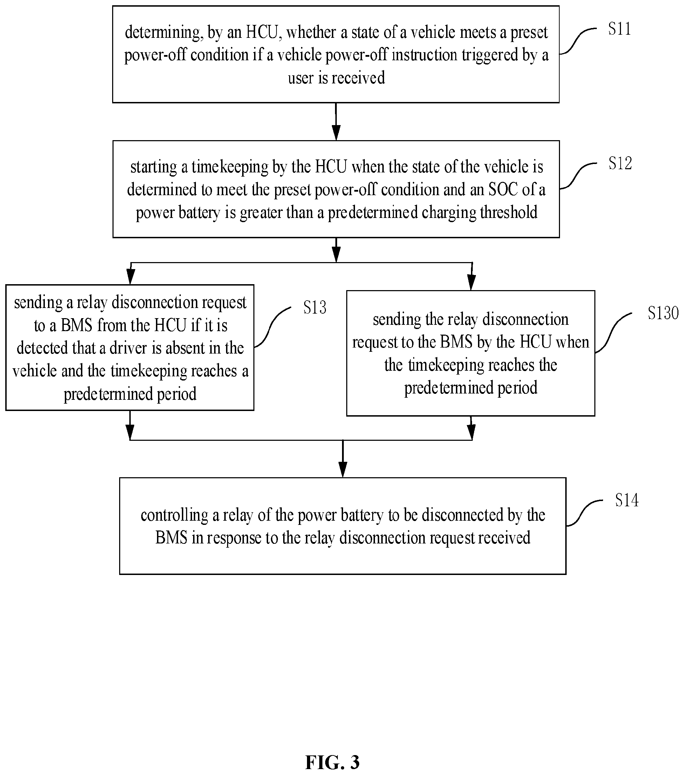

FIG. 3 is a flowchart of a method for controlling vehicle power-off provided by another exemplary embodiment;. As shown in FIG. 3, the method can further include step S130 on basis of FIG. 1.

In step S130, sending, by the HCU, the relay disconnection request to the BMS if the timekeeping reaches the predetermined period.

That is, the noise effect on the driver is avoided by making the delay disconnection of the contacts of the relay, the delay disconnection is limited to a predetermined period. If the predetermined period is exceeded, the noise effect is no longer considered, and the relay is directly controlled to be disconnected. This takes into account the power consumption of the vehicle when it is constantly powered, and the predetermined period is used to make a compromise between the power consumption and the noise influence. In the embodiment, both power consumption and noise influence are taken into account, and the noise influence on the driver is avoided as far as possible while the existing endurance of the vehicle is guaranteed.

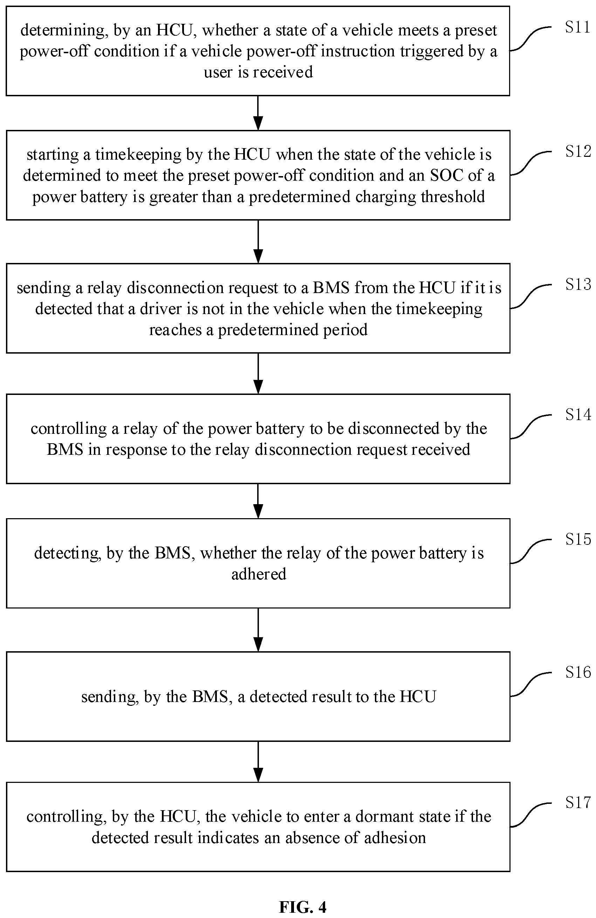

FIG. 4 is a flowchart of a method for controlling vehicle power-off provided by another exemplary embodiment. As shown in FIG. 4, on the basis of FIG. 1, the method can further include the following steps after the step S 14 where the BMS controls the relay of power battery to be disconnected.

In step S15, detecting, by the BMS, whether the relay of the power battery is adhered. The expression "the relay of the power battery is adhered" or the like herein means the contacts of the replay connect together and cannot disconnect.

In step S 16, sending, by the BMS, a detected result to the HCU.

In step S17, controlling, by the HCU, the vehicle to enter a dormant state if the detected result indicates an absence of adhesion.

When the relay of the power battery is controlled to be disconnected, there is a possibility of relay adhesion. For safety reasons, the vehicle can be controlled into the dormant state after confirming that the relay is not adhered. Methods in related technologies can be applied to determine whether the relay is adhered. In the embodiment, the safety of the vehicle is enhanced by controlling the vehicle to enter the dormant state while ensuring that the relay is not adhered.

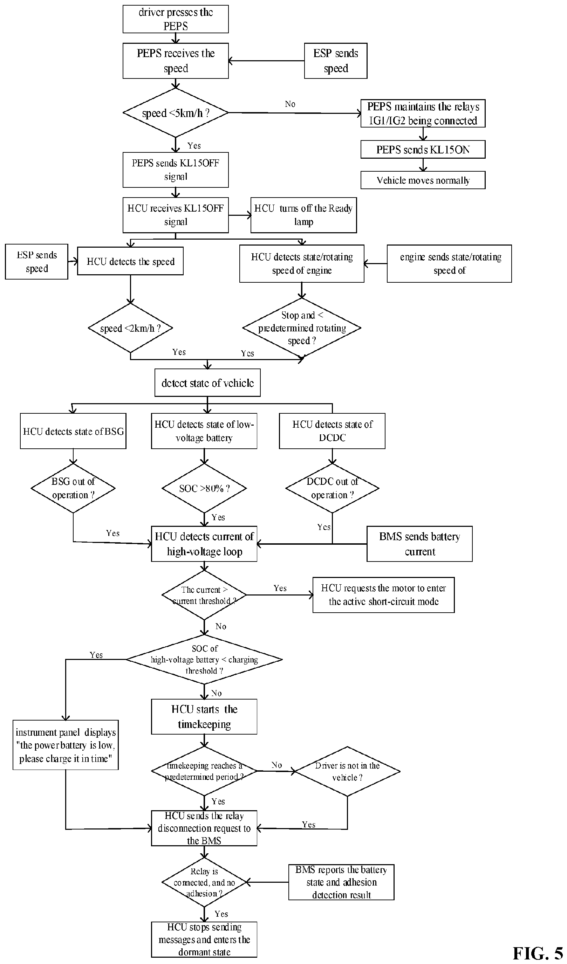

FIG. is a flowchart of a method for controlling vehicle power-off provided by another exemplary embodiment. As shown in FIG. 5, the method for controlling vehicle power-off can include the following steps.
(1) When the driver presses the PEPS, the PEPS receives the speed sent by the Electronic Stability Program (ESP) of the vehicle body and makes a determination;
   If the condition that the vehicle speed is less than 5km/h is met, a KL15OFF signal is sent to the HCU, EMS and various high-voltage components. After receiving the KL15OFF signal sent by the PEPS, the HCU starts to determine whether the state of the vehicle meets the preset power-off condition and requests the instrument to turn off the Ready lamp.
   If the condition that the vehicle speed is less than 5km/h is not met, the PEPS maintains the relays IG1/IG2 being connected, and the PEPS sends a KL15ON signal to make the vehicle continue to run normally.
(2) The HCU receives the vehicle speed sent by the ESP, and the next step of checking the vehicle state when the vehicle speed is less than 2km/h, the engine state is out of the working state (stop), and the engine rotating speed is less than the predetermined rotating speed;
   If the engine is not stopped, the rotating speed is not reduced to less than the predetermined rotating speed, or the vehicle speed is greater than 2km/h, the vehicle will execute the delayed power-off process until the engine is stopped, after the rotating speed is less than the predetermined speed, and the vehicle speed is less than 2km/h, and the next operation is then executed.
(3) The HCU detects the states of Belt-Driven Starter Generator (BSG), the DCDC, the 12V low-voltage battery, and the battery pack temperature, etc. If the BSG is out of operation, the SOC of the low-voltage battery is greater than 80%, and the DCDC exits the working state, the HCU detects the current (sent by the BMS) in the high voltage circuit. If the current in the high voltage circuit is greater than the current threshold, the HCU requests the motor to enter the active short-circuit mode (to avoid damage to the power battery, bus capacitor and other high-voltage components by too high back electromotive force); if the current in the high voltage circuit is less than the current threshold, the HCU determines that the state of the vehicle meets the preset power-off condition.
(4) The HCU began implementing a strategy of delaying to turn on the relay of the power battery, the conditions that whether the driver is in the vehicle, the state of the high-voltage power battery and the energy consumption of the continuous high-voltage state are taken into account to determine the time to send the relay disconnection request to the BMS.

Specifically, if the SOC of the high-voltage power battery is less than the charge threshold, the instrument panel displays "the power battery is low, please charge it in time", and the HCU sends the relay disconnection request to the BMS;

If the SOC of the high-voltage power battery is greater than the charge threshold, the HCU starts the timekeeping;

If it detects that the driver is absent in the vehicle and the timekeeping reaches a predetermined period (calibrated according to the comprehensive energy consumption of the delayed disconnection relay, e.g., 30s), the HCU sends the relay disconnection request to the BMS;

If the timekeeping reaches a predetermined period, the HCU sends the relay disconnection request to the BMS.

(5) When after the relay disconnection request sent by the HCU is received, the BMS controls to disconnect the relay and performs adhesion detection, the BMS reports the battery state and adhesion detection result to the HCU. If there is no adhesion, the HCU stops sending messages and enters the dormant state, and the vehicle is powered off.

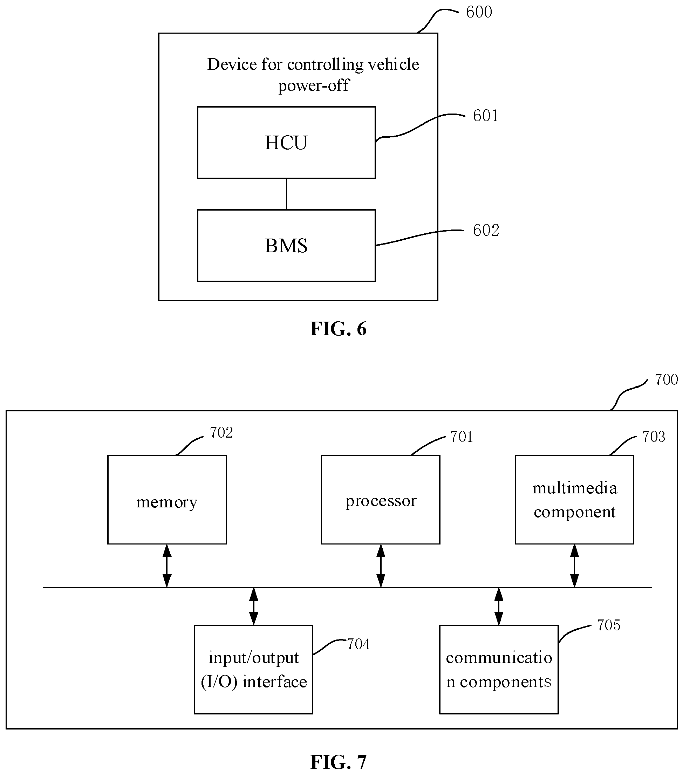

FIG. 6 is a block diagram of a device for controlling vehicle power-off provided in an exemplary embodiment. As shown in FIG. 6, the vehicle 600 for controlling vehicle power-off can include the HCU 601 and the BMS 602.

The HCU 601 is configured for determining whether a state of a vehicle meets a preset power-off condition if a vehicle power-off instruction triggered by a user is received; the HCU starts a timekeeping when the state of the vehicle is determined to meet the preset power-off condition and an SOC of a power battery is greater than a predetermined charging threshold; the HCU sends a relay disconnection request to the BMS 602 if it is detected that a driver is absent in the vehicle and the timekeeping reaches a predetermined period.

The BMS 602 is configured for controlling the power battery to be disconnected in response to the relay disconnection request received.

Optionally, the HCU 601 is further configured for sending directly the relay disconnection request to the BMS 602 if it is determined that the state of the vehicle meets the preset power-off condition and the SOC of the power battery is less than or equal to the predetermined charging threshold.

Optionally, the HCU 601 is further configured for sending the relay disconnection request to the BMS 602 if the timekeeping reaches the predetermined period.

Optionally, the BMS 602 is further configured for detecting whether the relay of the power battery is adhered and sending the detected result to the HCU 601; the HCU 601 is further configured for controlling the vehicle to enter a dormant state if the detected result indicates an absence of adhesion.

Optionally, the preset power-off conditions include: a vehicle speed is less than a predetermined vehicle speed threshold, an engine rotating speed is less than a predetermined rotating speed threshold, a belt-driven starter generator exits a working state, a DCDC exits the working state, an SOC of a low-voltage battery is greater than a predetermined power threshold, and a current in a high-voltage circuit is less than a predetermined current threshold.

With respect to the device in the above embodiments, the specific ways in which each module performs operations have been described in detail in the embodiments related to the method, which will not be explained in detail here.

Through the above technical solution, on the one hand, when the driver is absent in the vehicle, the relay of the power battery is controlled to be disconnected, which can avoid the noise caused by the disconnection of contacts of the relay affecting the driver; on the other hand, the energy state of the power battery is also considered, so that the delayed disconnection of the contacts of the relay will not affect the energy reserve of the power battery too much, so as to avoid the noise influence on the driver as much as possible under the condition of guaranteeing the existing endurance of the vehicle.

FIG. 7 is a block diagram of an electronic apparatus 700 provided in an exemplary embodiment. As shown in FIG. 7, the electronic apparatus 700 can include: a processor 701 and a memory 702. The electronic apparatus 700 can further include a multimedia component 703, an input/output (I/O) interface 704, and one or more of communication components 705.

The processor 701 is used to control the overall operation of the electronic apparatus 700 to complete all or part of the steps in the method for controlling vehicle power-off described above. The memory 702 is used to store various types of data to support operations on the electronic apparatus 700, the data can include, for example, instructions for any application or method used to operate on the electronic apparatus 700, as well as application-related data, such as contact data, incoming and outgoing messages, pictures, audio, video, and so on. The Memory 702 can be implemented by any type of volatile or non-volatile memory device or a combination of them, such as Static Random Access Memory (SRAM), Electrically Erasable Programmable Read-Only Memory (EEPROM), Erasable Programmable Read-Only Memory (EPROM), Programmable Read-Only Memory (PROM), Read Only Memory (ROM), magnetic memory, flash memory, disk or optical disc. Multimedia components 703 can include a screen and audio components. The screen, for example, can be a touch screen, the audio components are used to output and/or input the audio signal. For example, the audio components can include a microphone used to receive external audio signals. The received audio signals can be further stored in the memory 702 or sent via the communication components 705. The audio components further include at least one speaker for output of the audio signal. The I/O interface 704 provides an interface between the processor 701 and other interface modules, which can be keyboards, mice, buttons, etc. These buttons can be virtual buttons or physical buttons. The communication components 705 are used for wired or wireless communication between the electronic apparatus 700 and other devices. Wireless communications, such as Wi-Fi, Bluetooth, Near Field Communication (NFC), 2G, 3G, 4G, NB-IOT, eMTC, or other 5G, etc., or one or a combination of them, which is not limited herein. Therefore, the corresponding communication components 705 can include: Wi-Fi module, Bluetooth module, NFC module and so on.

In an exemplary embodiment, the electronic apparatus 700 can be used by one or more Application Specific Integrated circuits (ASIC), Digital Signal processor (DSP), Digital Signal Processing Device (DSPD), Programmable Logic Device (PLD), Field Programmable Gate Array (FPGA), controller, microcontroller, microprocessor or other electronic component implementation to perform the method for controlling vehicle power-off described above.

In another exemplary embodiment, a computer-readable storage medium including program instructions is also provided to implement the method for controlling vehicle power-off described above when the program instructions are executed by the processor. For example, the computer readable storage medium can be the memory 702 including program instructions which can be executed by the processor 701 of the electronic apparatus 700 to complete the method for controlling vehicle power-off described above.

In another exemplary embodiment, a computer program product is also provided that includes a computer program capable of being executed by a programmable device having a code portion for executing the method for controlling vehicle power-off described above when executed by the programmable device.

The preferred embodiments of the disclosure are described in detail in combination with the attached drawings. However, the present disclosure is not limited to the specific details in the above-mentioned embodiments. Within the scope of the technical conception of the present disclosure, a variety of simple variations of the technical solution of the present disclosure can be carried out, and these simple variations are within the scope of protection of the present disclosure.

It should also be noted that the specific technical features described in the above specific embodiments can be combined in any suitable manner, provided that there is no contradiction. In order to avoid unnecessary duplication, the various possible combinations are not otherwise stated in the present disclosure.

In addition, any combination of different embodiments of the present disclosure can also be made, provided that they do not contradict the idea of the present disclosure, they shall also be regarded as disclosed in the present disclosure.

In the description of the specification, the reference terms "an embodiment", "some embodiments", "examples", "specific examples", or "some examples", etc., are used to refer to specific features, structures, materials, or features incorporated in the embodiment or description of the example contained in at least one embodiment or example of the present disclosure. In the specification, schematic representations of the above terms must not be directed to identical embodiments or examples. Further, the specific features, structures, materials or features described can be combined in a suitable manner in any one or more embodiments or examples. In addition, without contradicting each other, those skilled in the art can combine and combine the different embodiments or examples described in the specification and the characteristics of different embodiments or examples.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly include one or more such technical feature(s). In the description of the present invention, "a plurality of" means two or more, unless there is additional explicit and specific limitation.

Any description of a process or method described in the flowchart or otherwise herein can be understood to represent a module, fragment, or part of code including one or more executable instructions for implementing steps of a custom logic function or process, and the scope of the preferred embodiments of the present disclosure includes additional implementations which can not be in the order shown or discussed. Includes the execution of functions according to the functions involved in a substantially simultaneous manner or in reverse order, which should be understood by those skilled in the art to which the embodiments of the present disclosure belong.

Logic and/or steps expressed in a flowchart or otherwise described herein, for example, can be thought of as a fixed sequence list of executable instructions for performing a logical function, which can be concretely implemented in any computer-readable medium, For use by, or in combination with, an instruction executing system, device or apparatus (such as a computer-based system, a system including a processor, or other system that can take instructions from and execute instructions from an instruction executing system, device or apparatus). For the purposes of the specification, "computer readable medium" can mean any device that can contain, store, communicate, transmit or transmit programs for use by or in conjunction with an instruction executing system, device or apparatus. More specific examples of computer readable media (non-exhaustive list) include the following: an electrical connection unit (electronic apparatus) having one or more wiring, a portable computer cartridge (magnetic device), a random access memory (RAM), a read-only memory (ROM), an erasable and editable read-only memory (EPROM or flash memory), an optical fiber device, and a portable optical disc read-only memory (CDROM). In addition, the computer-readable medium can even be paper or other suitable medium on which the program can be printed, since the program can be obtained electronically, for example, by optical scanning of the paper or other medium, followed by editing, interpreting or, if necessary, processing in other suitable ways, and then stored in a computer memory.

It should be understood that parts of the present disclosure can be implemented with hardware, software, firmware, or a combination thereof. In the above embodiments, multiple steps or methods can be implemented with software or firmware stored in memory and executed by a suitable instruction execution system. For example, if implemented in hardware as in another embodiment, it can be implemented using any of the following technologies known in the art, or a combination thereof: discrete logic circuits with logic gates for implementing logic functions on data signals, application-specific integrated circuits with suitable combinational logic gates, programmable gate arrays (PGA), field programmable gate arrays (FPGA), etc.

Those skilled in the art can understand that all or part of the steps carried by the implementation of the embodiments method can be performed by a program directed to the relevant hardware, and that the program can be stored in a computer readable storage medium that, when executed, includes one or a combination of the steps of the method embodiment.

In addition, the functional units in various embodiments of the present disclosure can be integrated in a single processing module, the units can exist physically separately, or two or more units can be integrated in a single module. The above integrated modules can be realized either in the form of hardware or software function modules. The integrated module, if implemented in the form of a software function module and sold or used as a stand-alone product, can also be stored in a computer-readable storage medium.

The above mentioned storage media can be read-only memory, disk or optical disc. Although embodiments of the present disclosure have been shown and described above, it is understood that the above embodiments are exemplary and cannot be construed as limitations on the present disclosure, and that those skilled in the art can vary, modify, replace, and variant the above embodiments within the scope of the present disclosure.

## Claims

1. A method for controlling vehicle power-off, **characterized in that** the method comprises:
determining, by a hybrid control unit (HCU), whether a state of a vehicle meets a preset power-off condition if a vehicle power-off instruction triggered by a user is received;
starting a timekeeping by the HCU when the state of the vehicle is determined to meet the preset power-off condition and an State of Charge (SOC) of a power battery is greater than a predetermined charging threshold;
sending, by the HCU, a relay disconnection request to a Battery Management System (BMS) if it is detected that a driver is absent in the vehicle and the timekeeping reaches a predetermined period; and
controlling, by the BMS, a relay of the power battery to be disconnected in response to the relay disconnection request received.

2. The method according to claim 1, **characterized in that** the method further comprises:
sending directly, by the HCU, the relay disconnection request to the BMS if it is determined that the state of the vehicle meets the preset power-off condition and the SOC of the power battery is less than or equal to the predetermined charging threshold.

3. The method according to claim 1 or 2, **characterized in that** the method further comprises:
sending, by the HCU, the relay disconnection request to the BMS if the timekeeping reaches the predetermined period.

4. The method according to any one of claims 1 to 3, **characterized in that** after the step of controlling, by the BMS, the relay of the power battery to be disconnected, the method further comprises:
detecting, by the BMS, whether the relay of the power battery is adhered;
sending, by the BMS, a detected result to the HCU; and
controlling, by the HCU, the vehicle to enter a dormant state if the detected result indicates an absence of adhesion.

5. The method according to any one of claims 1 to 4, **characterized in that** the preset power-off condition comprises:
a vehicle speed being less than a predetermined vehicle speed threshold,
an engine rotating speed being less than a predetermined rotating speed threshold,
a belt-driven starter generator exiting a working state,
a DCDC exiting the working state,
an SOC of a low-voltage battery being greater than a predetermined power threshold, and
a current in a high-voltage circuit being less than a predetermined current threshold.

6. A device for controlling vehicle power-off, **characterized in that** the device comprises:
an HCU, configured for determining whether a state of a vehicle meets a preset power-off condition if a vehicle power-off instruction triggered by a user is received; the HCU starts a timekeeping when the state of the vehicle is determined to meet the preset power-off condition and an SOC of a power battery is greater than a predetermined charging threshold; and the HCU sends a relay disconnection request to a BMS if it is detected that a driver is absent in the vehicle and the timekeeping reaches a predetermined period; and
the BMS, configured for controlling the power battery to be disconnected in response to the relay disconnection request received.

7. The device according to claim 6, **characterized in that** the HCU is further configured for sending directly the relay disconnection request to the BMS if it is determined that the state of the vehicle meets the preset power-off condition and the SOC of the power battery is less than or equal to the predetermined charging threshold.

8. The device according to claim 6 or 7, **characterized in that** the HCU is further configured for sending the relay disconnection request to the BMS if the timekeeping reaches the predetermined period.

9. The device according to any one of claims 6 to 8, **characterized in that** the BMS is further configured for detecting whether the relay of the power battery is adhered and sending a detected result to the HCU; and the HCU is further configured for controlling the vehicle to enter a dormant state if the detected result indicates an absence of adhesion.

10. The device according to any one of claims 6 to 9, **characterized in that** the preset power-off condition comprises:
a vehicle speed being less than a predetermined vehicle speed threshold,
an engine rotating speed being less than a predetermined rotating speed threshold,
a belt-driven starter generator exiting a working state,
a DCDC exiting the working state,
an SOC of a low-voltage battery being greater than a predetermined power threshold, and
a current in a high-voltage circuit being less than a predetermined current threshold.

11. A computer-readable storage medium, storing a computer program thereon, **characterized in that** when the computer program is executed by a processor, the steps of the method according to any one of claims 1-5 can be implemented.

12. An electronic apparatus, **characterized in that** the electronic apparatus comprises: a memory storing a computer program thereon; and
a processor configured for executing the computer programs in the memory to implement the steps of the method according to any one of claims 1-5.
